# NEW EUROPEAN PATENT SPECIFICATION

(11) **EP 3 935 206 B2**
(45) Date of publication and mention of the opposition decision: **09.12.2026**
(45) Mention of the grant of the patent: 24.04.2024
(21) Application number: 20767195.9
(22) Date of filing: 03.03.2020
(51) Int. Cl.: C09D 5/00

(54) **THIN FILM INTERFERENCE PIGMENTS WITH NANOPARTICLES COATING**
DÜNNSCHICHTIGE INTERFERENZPIGMENTE MIT NANOPARTIKELBESCHICHTUNG
PIGMENTS D'INTERFÉRENCE À COUCHES MINCES AVEC REVÊTEMENT DE NANOPARTICULES

(30) Priority: 04.03.2019 US 201962813483 P; 27.01.2020 US 202062966391 P
(43) Date of publication of application: 12.01.2022
(73) Proprietor: Viavi Solutions Inc., Chandler, AZ 85286 (US)
(72) Inventor: ARGOITIA, Alberto, San Jose, California 95002 (US); BOOK, John Edward, San Jose, California 95002 (US); ZIEBA, Jaroslaw, San Jose, California 95002 (US)
(74) Representative: Finnegan Europe LLP
(86) International application number: PCT/US2020/020839
(87) International publication number: WO 2020/180892

(56) References cited:
- EP-A1- 0 307 771
- EP-A1- 0 327 739
- EP-A1- 1 254 928
- EP-A1- 3 546 528
- WO-A1-2015/052319
- WO-A1-2017/041085
- WO-A1-2017/041085
- WO-A1-2018/096936
- CN-A- 108 864 758
- DE-A1- 102008 060 228
- DE-A1- 102009 023 157
- RU-C1- 2 636 088
- US-A1- 2003 215 641
- US-A1- 2008 318 012
- US-A1- 2013 200 415
- US-A1- 2013 221 837
- US-A1- 2016 168 386
- US-A1- 2018 073 159
- US-A1- 2018 084 658
- US-A1- 2018 155 551

## Description

### RELATED APPLICATIONS

This application claims the benefit of priority to U.S. Provisional Application No. 62/966,391, filed January 27, 2020, and U.S. Provisional Application No. 62/813,483, filed March 4, 2019.

### FIELD OF THE INVENTION

The present disclosure generally relates to an article including a thin film interference pigment; and a coating including a selectively absorbing nanoparticle. The article can exhibit increased chromaticity as compared to the thin film interference pigment alone. Methods of making the article are also disclosed.

### BACKGROUND OF THE INVENTION

Fabry-Perot multilayer structures exhibit a color primarily because of the thickness of a dielectric layer present in the structure. The thickness of the dielectric layer therefore limits the pallet of colors that can be produced.

One way to manipulate the color produced can be to add a colorant into an ink or paint vehicle that includes the Fabry-Perot multilayer structure. However, a blend of a colorant and a Fabry-Perot multilayer structure can be difficult to formulate to obtain the desired final color due to variables with the colorant, such as colorant concentration, colorant size, colorant distribution. Additionally, a blend of a colorant and a Fabry-Perot multilayer structure can be difficult to reproduce batch-to-batch.

Another problem with a blend is the issue of light scattering. In particular, a large quantity of colorant particles distributed in a large volume to create the ink or paint will significantly increase light scattering so that the scattering effects are interdependent. Additionally, colorant absorbing pigments typically used in blends have large particle sizes, which can also increase light scattering because each large particle can independently scatter light.

WO 2017/041085, US 2013/221837, US 2013/200415, EP 1 254 928, WO 2015/052319 and DE 10 2008 060228 disclose articles, thin film structures and/or pigments known in the art.

### BRIEF DESCRIPTION OF THE DRAWINGS

Features of the present disclosure are illustrated by way of example and not limited in the following figure(s), in which like numerals indicate like elements, in which:
FIG. 1 illustrates the percent reflectance of the Gold Pigment (pre-flake) alone, Sample C (green spotted), and Sample A (green high saturation);
FIG. 2 illustrates the hue of the samples in FIG. 1 using an a*, b* graph;
FIG. 3 is a reflectance plot for a thin film interference pigment a low and high angle;
FIG. 4 is a reflectance plot for a thin film interference pigment for various angles from low to high angle;
FIG. 5 illustrates a thin film interference pigment with a color travel from green to purple; and
FIG. 6 illustrates a thin film interference pigment with a color travel from magenta to green.

### SUMMARY OF THE INVENTION

In an aspect, there is disclosed an article according to claim 1.

In another aspect, there is disclosed a method of making an article according to claim 6.

Additional features and advantages of various embodiments will be set forth, in part, in the description that follows, and will, in part, be apparent from the description, or can be learned by the practice of various embodiments. The objectives and other advantages of various embodiments will be realized and attained by means of the elements and combinations particularly pointed out in the description herein.

### DETAILED DESCRIPTION OF THE INVENTION

For simplicity and illustrative purposes, the present disclosure is described by referring mainly to an example thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Additionally, the elements depicted in the accompanying figures may include additional components and some of the components described in those figures may be removed and/or modified without departing from scopes of the present disclosure. Further, the elements depicted in the figures may not be drawn to scale and thus, the elements may have sizes and/or configurations that differ from those shown in the figures.

It is to be understood that both the foregoing general description and the following detailed description are exemplary and explanatory only, and are intended to provide an explanation of various embodiments of the present teachings. In its broad and varied embodiments, disclosed herein are articles; and a method of making and using articles.

The present disclosure describes articles including a pigment, such as thin film interference pigment, coated with a selectively absorbing nanoparticle that can manipulate the reflectance of the pigment to improve chromaticity and/or create a color (at both normal and angle) not possible with the pigment alone. The method of making the disclosed articles is cost effective and can provide a high throughput of higher performance special effect pigments, such as high chroma pigments.

In an aspect, the pigment can include a core material chosen from reflective opaque materials, semi-transparent materials, and transparent materials depending upon the desired optical property of the resultant pigment.

The pigment can be a metal, non-metal, or metal alloy. In one example, the materials for the pigment can include any materials that have reflective characteristics in the desired spectral range. For example, any material with a reflectance ranging from 5% to 100% in the desired spectral range. An example of a reflective material can be aluminum, which has good reflectance characteristics, is inexpensive, and is easy to form into or deposit as a thin layer. Non-limiting examples of reflective opaque material for use in the pigment include aluminum, copper, silver, gold, platinum, palladium, nickel, cobalt, niobium, chromium, tin, iron, and combinations or alloys of these or other metals can be used as the pigment. In an aspect, the material for the pigment can be a white or light colored metal. In other examples, the pigment can include, but is not limited to, the transition and lanthanide metals and combinations thereof; as well as metal carbides, metal oxides, metal nitrides, metal sulfides, a combination thereof, or mixtures of metals and one or more of these materials. In an aspect, the pigment may include a transparent or semi-transparent material chosen from glass, silica, titania, alumina, natural mica, synthetic mica, and bismuth oxychloride. In another aspect, the pigment can include a metalloid material chosen from silicon, germanium, and molybdenum.

In another aspect, the pigment, such as a thin film interference pigment, can be any special effect pigment, such as a pigment including a reflector layer, a dielectric layer, and an absorber layer, and optionally a magnetic layer. Non-limiting examples of commercially available pigments include SPECTRAFLAIR ^{®}, CHROMAFLAIR ^{®}, OVP, SecureShift, and OVMP available from Viavi Solutions, Inc. (San Jose, CA).

The pigment, such as a thin film interference pigment, can be coated with a selectively absorbing nanoparticle. The nanoparticles can selectively absorb any undesired high or low angle colors from a reflectance spectrum of the pigment, such as the thin film interference pigment. The undesired colors can be located along a color travel path of the thin film interference pigment and can be located between different desired colors. Additionally, the nanoparticles can modify a desired color of the article at different viewing angles. Finally, the nanoparticles can change a color shift of the pigment, such as a thin film interference pigment, so that the color shift of the article is from a low to high wavelength.

The selectively absorbing nanoparticles can be colored and/or can act as a color filter. The selectively absorbing nanoparticles are a nanoparticle chosen from a pigment, a dye, a metallic nanoparticle, a metal oxide, a metal carbide, a metal sulfide, a metal nitride, and combinations thereof. Non-limiting examples of selectively absorbing nanoparticles include titanium dioxide, zinc oxide, silicon dioxide, aluminum oxide, iron (II, III) oxide, zirconium dioxide, indium tin oxide, CeO₂, zinc nitride, gold, silver, carbon black, iron oxide, mixed metal oxides, zinc sulfide, iron sulfide, copper sulfide, perylene, perinone, quinacridone, quinacridonequinone, anthrapyrimidine , anthraquinone, anthanthrone, benzimidazolone, disazo condensation, azo, quinolones, xanthene, azomethine, quinophthalone, indanthrone, phthalocyanine, triarylcarbonium, dioxazine, aminoanthraquinone, isoindoline, diketopyrrolopyrrole, thioindigo, thiazineindigo, isoindoline, isoindolinone, pyranthrone, isoviolanthrone, miyoshi methane, triarylmethane, and mixtures thereof. In an aspect, the selectively absorbing nanoparticle can be charged.

In particular, the coating can include the selectively absorbing nanoparticles in a suitable matrix. The coating can include a plurality of selectively absorbing nanoparticles in which a portion of the selectively absorbing nanoparticles can be colored. Another portion of the selectively absorbing nanoparticles can be uncolored. In an aspect, the coating can include a plurality of selectively absorbing nanoparticles in which all of the selectively absorbing nanoparticles are a same color. In another aspect, the coating can include a plurality of selectively absorbing nanoparticles of different colors.

The selectively absorbing nanoparticles present in the coating can be the same or different, such as in terms of the material for the nanoparticle, the average particle of the nanoparticles, the concentration (percent volume) of nanoparticles in the coating, etc. In an aspect, the coating includes a plurality of selectively absorbing nanoparticles that are different one from another. A skilled person can adjust the above-described variables to achieve an article with the desired resultant color, including the desired lightness and chroma. For example, a skilled person can select a weakly colored nanoparticle, but with a large average particle size, in a high concentration in the coating to achieve a resultant color in the article with high chroma. Additionally, and or alternatively, a skilled person can select a highly colored nanoparticle, but with a small average particle size, in a medium concentration in the coating to still achieve a resultant color in the article with high chroma.

The selectively absorbing nanoparticles can have an average particle size ranging from less than about 300 nm; for example, from about 2 nm to about 100 nm; for example, from about 4 nm to about 95 nm; and as a further example, from about 6 nm to about 90 nm. The average particle size can have an effect on the resultant chroma of the article. For example, a large average particle size can increase the intensity and/or chroma of the resultant color of the article because the article will achieve color saturation faster, i.e., with less material.

The concentration of the selectively absorbing nanoparticles can also affect the intensity and/or chroma of the resultant color of the article. The selectively absorbing nanoparticles can be present in the coating in an amount greater than about 40% by volume, for example greater than about 65% by volume, and as a further example greater than about 70% by volume. For example, a coating with greater than about 70% by volume of selectively absorbing nanoparticles will have a higher color saturation as compared to a coating with about 65% by volume of selectively absorbing nanoparticles. As a further example, an intensity of the color of the article is increased by a high concentration of the selectively absorbing nanoparticle in the coating.

The coating of selectively absorbing nanoparticles can be a single layer or multiple layers. In an aspect, the disclosed article can include a thin film interference pigment with a coating with multiple layers of selectively absorbing nanoparticles, in which each layer of the multiple layers includes a plurality of selectively absorbing nanoparticles that are different one from another. The use of multiple layers can also increase the color saturation of the article.

The coating of selectively absorbing nanoparticles can be continuous or discontinuous on a surface of the pigment, such as a thin film interference pigment. In an aspect, the coating is continuous on the surface of the pigment. In another aspect, the coating is discontinuous on the surface and has a low impact on light scattering. The coating of selectively absorbing nanoparticles can be present on greater than about 90% of a surface of the pigment; for example, greater than about 95% of the pigment; and as a further example, can be present on all surfaces (100% continuous/encapsulating) the pigment. In an aspect, the coating of selectively absorbing nanoparticles can be discontinuous, such as in the form of spots, lines, etc. An intensity of a color of the article can be increased by a fully encapsulating coating.

In an aspect, the coating can, but should not, negatively impact a hiding property of the thin film interference pigment.

The selectively absorbing nanoparticles can have other properties besides, or in addition to, ultraviolet (UV) light absorption. In an aspect, the selectively absorbing nanoparticles can have a property chosen from fluorescence, phosphorescence, thermochromic, photochromic, and infrared (IR) fluorescence (anti-stokes).

UV light exposure can degrade nanoparticles. In an aspect, the coating can include other particles that can protect the nanoparticles, for example, particles that absorb ultraviolet light and/or decrease photocatalytic activity inherent in some nanoparticles. The coating can include other particles, such as titanium dioxide, zinc oxide, silicon dioxide, Al₂O₃, and CeO₂.

The nanoparticles can also exhibit metallic resonance plasmons effects. These effects can be enhanced by local fields so that the nanoparticles can have different spectral responses depending upon the light source, e.g., polarized or unpolarized light.

In an aspect, instead of a thin film interference pigment, the article can include a thin film interference foil; and a coating of selectively absorbing nanoparticles on the thin film interference foil. The article can be used as a thread in security applications. The article can include a substrate (PET) and can have the following structure: PET/absorber/dielectric/reflector/coating of selectively absorbing nanoparticle. In another aspect, the article can have the following structure: PET/reflector/dielectric/absorber/coating of selectively absorbing nanoparticle.

A method of making the disclosed article can be performed using techniques, such as layer-by-layer technology. In an aspect, the method can include providing a post-processed thin film interference pigment. In another aspect, the method can include making a thin film interference pigment and coating with selectively absorbing nanoparticles.

A method of making the article disclosed herein can include providing a pigment, such as a thin film interference pigment; and coating the thin film interference pigment with a selectively absorbing nanoparticle. The coating step can include providing a layer of a first charged nanoparticle to the pigment; rinsing; providing a layer of a second charged nanoparticle to the layer of the first charged nanoparticle, wherein the second charged nanoparticle material is oppositely charged from the first charged nanoparticle material; and rinsing; wherein a coating of selectively absorbing nanoparticles is formed on a surface of the pigment. The steps of providing the layer of the first charged nanoparticle and providing the layer of the second charged nanoparticle can be repeated so that the coating of selectively absorbing nanoparticles is a multilayer coating.

The coating step can also include providing a layer of a first charged polymer to the pigment; rinsing; providing a layer of a first charged nanoparticle to the layer of the first charged polymer, wherein the first charged nanoparticle material is oppositely charged from the first charged polymeric material; and rinsing; wherein a coating of selectively absorbing nanoparticles is formed. The steps of providing the layer of the first charged polymer and providing the layer of the first charged nanoparticle can be repeated so that the coating of selectively absorbing nanoparticles is a multilayer coating.

The coating step can also include providing a final step with a charged polymer to the last coating including charged selectively absorbing nanoparticle of the multilayer to provide for specific surface functionalization of the pigments.

The coating of selectively absorbing nanoparticles can fully encapsulate the pigment, such as the thin film interference pigment. The coating is continuous on all surfaces of the pigment. Alternatively, the coating of selectively absorbing nanoparticles can encapsulate a portion of the pigment, such as the thin film interference pigment. The coating can be continuous, and yet only encapsulate a portion of the pigment. The coating can be discontinuous and encapsulate a portion of the pigment.

In an alternative method, the multilayer coating can be created by alternating a layer of selectively absorbing nanoparticles and a layer of charged polymers (polyelectrolytes) or other molecules presenting interacting binding sites. So, a layer sequence comprises one or more materials having ionic groups of opposite charges. A simple layer sequence can be ABAB(AB)n, wherein n is an integer greater than 1. Notice that even shown as different materials A and B, these two materials could be the same material where the surface was rendered of opposite charges. The multilayer coating could also use more materials. The multilayer coating can include any materials and is only dependent upon the selection of the charges for each material.

The steps of providing a layer of first charged or second charged nanoparticles can use any technologies, such as filtration, sedimentation or centrifugation processes. In these processes, the nanoparticles are allowed to sediment or are filtered or centrifuged (faster processes) after the successive application of the first charged nanoparticle (A), rinsing stage, and resuspension/application of the second charged nanoparticle (B). Other process may include successive filtration using systems such as filter reactors, trickle-bed reactors, up-flow reactors, membrane reactors, and the equivalent. In another method, the pigment could be forced to transit (i.e. by sprayed) to areas containing atomized solutions of first charged nanoparticle (A), rinsing media, and second charged nanoparticle (B). Alternative deposition techniques include wet coating method including dip coating, spin coating, flow coating, spray coating, roll coating, gravure coating, and a similar method.

The steps of rinsing can be performed with any solvent, such as a polar solvent. Non-limiting examples of solvents can include water; acetates, such as ethyl acetate, propyl acetate, and butyl acetate; acetone; ketones, such as dimethyl ketone (DMK), methylethyl ketone (MEK), secbutyl methyl ketone (SBMK), ter-butyl methyl ketone (TBMK), cyclopenthanon, and anisole; glycol and glycol derivatives, such as propylene glycol methyl ether, and propylene glycol methyl ether acetate; alcohols, such as isopropyl alcohol, and diacetone alcohol; esters, such as malonates; heterocyclic solvents, such as n-methyl pyrrolidone; hydrocarbons, such as toluene, and xylene; coalescing solvents, such as glycol ethers; and mixtures thereof.

The method can further include a step of providing a layer to a surface of the pigment prior to providing a coating of nanoparticles. The layer is located between the thin film interference pigment and the coating to protect the thin film interference pigment or to provide a receptive surface for the coating. In an aspect of the invention, the distribution of the receptive layer on the surface of the pigment can allow for controlling the distribution of the coating including the selectively absorbing nanoparticles. In particular, the layer can inhibit oxidation of the pigment when it is exposed to the coating of selectively absorbing nanoparticles. The layer can include a sol-gel layer of materials such as silica, titania, alumina, zirconia, ceria, or combinations to mention few or a polymeric layer, for example. In an aspect, the method of making an article can include providing a pigment; providing a layer of a first charged nanoparticle to the pigment; rinsing; providing a layer of charged polymer (polyelectrolytes) or other molecules presenting interacting binding sites; rinsing; providing a layer of a second charged nanoparticle to the layer of the charged polymer (polyelectrolytes) or other molecules presenting interacting binding sites; and rinsing.

The method can further include a step of providing a second protecting layer to a top-most layer of the coating of nanoparticles. The second protecting layer can include a layer of charged polymers (polyelectrolytes) or other organic molecules presenting interacting binding sites or a sol-gel layer. In an aspect, a second protecting layer of charged polymers (polyelectrolytes) or other organic molecules presenting interacting binding sites can provide a functionalized outer surface with tunable properties such as hydrophilicity, hydrophobicity, lipophilicity, permeability, hardness, stiffness, to mention a few to the pigment.

In an additional aspect, the method can further include encapsulating the selectively absorbing nanoparticles, which are coated on the pigment, with a protectant layer.

The method can include making a thin film interference pigment on a substrate with a release layer. The release layer can be compatible with liquid coating processes and vacuum deposition.

The method can include several post-processing steps, such as stripping the article from the release layer/substrate, grinding, etc.

### EXAMPLES

Example 1 - A gold thin film interference pigment was encapsulated to varying degrees to produce different levels of intensity depending on the saturation/intensity by the coated selectively absorbing nanoparticle. The pigment was based on the following structure: Cr/ZnS/Al/ZnS/Cr. In sample A) a gold thin film interference pigment was fully encapsulated with a continuous coating of selectively absorbing nanoparticles, i.e. a cyan pigment, in a high concentration. In sample B) the same gold thin film interference pigment was fully encapsulated with a continuous coating of selectively absorbing nanoparticles, i.e. the same cyan pigment, but with a lower concentration of the selectively absorbing nanoparticles in the coating, e.g. 65% by volume. In sample C) the same gold thin film interference pigment was partially encapsulated with a discontinuous coating of selectively absorbing nanoparticles, i.e. the same cyan pigment, but with a larger average particle size as compared to samples A and B. All three samples A, B, and C will exhibit a green color, but with varying degrees of intensity and chroma. Sample A has a higher intensity/color saturation as compared to Samples B and C. Samples B and C had a less saturated color, i.e., it is more pastel, because reflected light comes from areas of the pigment that are not filtered by the coating. An intensity of a color of the article was increased by a high concentration of the selectively absorbing nanoparticle in the coating. Additionally, an intensity of a color of the article was increased by a fully encapsulating coating.

The optical characterization of the three Samples was done using paint draw downs on Leneta cards and analyzed under diffuse illumination with a DC650 Photospectrometer. Table 1 shows the Lightness (L*), a*, b*, chroma and hue of the Samples. As can be seen, the lightness (L*) decreased and the hue increased as the coating of the selectively absorbing nanoparticles was increased.

**Table 1. Optical Properties measured with DC650 Photospectrometer.**

| Sample Name | Gold Pigment Alone | Sample C | Sample A |
|---|---|---|---|
| L* | 78.98 | 71.82 | 54.25 |
| a* | 0.19 | -15.99 | -42.84 |
| b* | 54.56 | 40.65 | 13.20 |
| c* | 54.56 | 43.68 | 44.82 |
| h | 89.8 | 111.48 | 162.88 |

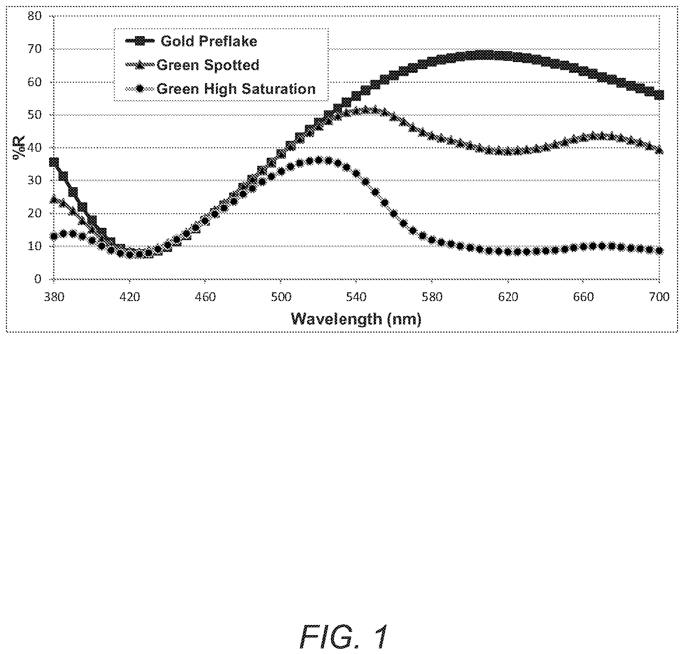

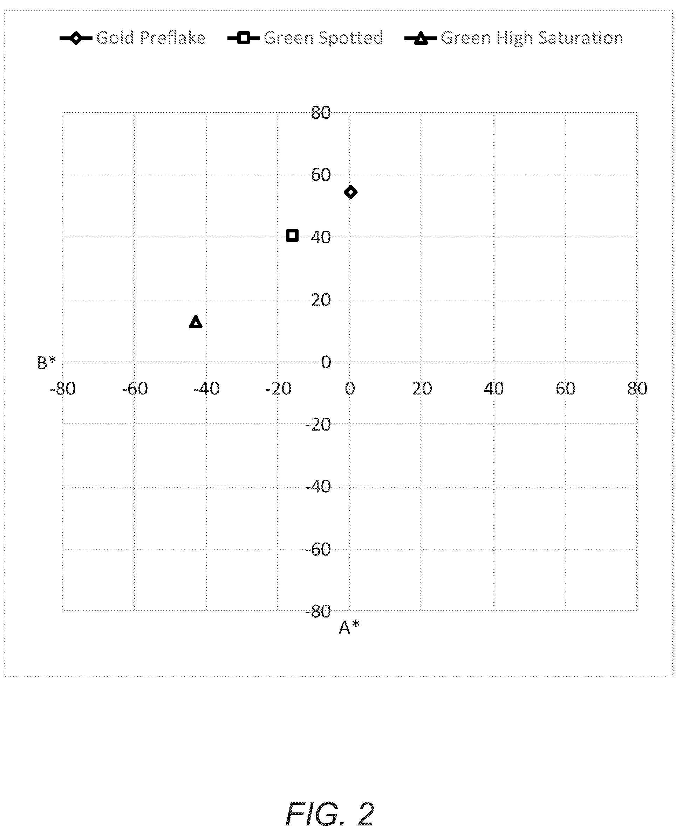

FIG. 1 illustrates the percent reflectance of the Gold Pigment (pre-flake) alone, Sample C (green spotted), and Sample A (green high saturation). FIG. 2 illustrates the hue of the samples in FIG. 1 using an a*, b* graph. Looking at FIGS. 1 and 2, one can see the evolution of the color as the concentration and/or encapsulation of the coating of the selectively absorbing nanoparticles (cyan pigment) increases. As reported in Table 1 and shown in FIG. 2, Sample A is green with a higher hue value of 162.88, followed by Sample C, which visually looks like a yellow-green color with a hue of 111.48, and the gold pigment (pre-flake) alone is a gold color with a hue of 89.8 (does not include a coating of selectively absorbing nanoparticles, e.g., cyan pigment).

Example 2 - The colors at normal and high angle (60°) of commercially available pigments with a coating of selectively absorbing nanoparticles (cyan, magenta, yellow, and green) were used to determine the expected dominant spectral color. However, depending upon variables, such as those discussed herein including intensity, absorbing power, and concentration of nanoparticles, the color shift trajectory of the coated thin film interference pigment can change. Additionally, optical properties of a selectively absorbing nanoparticle can have small spectral changes that modify a visual color observed. For example, a number of cyan pigments show band tails in the visible region that produce a yellow component to color. For this reason, the spectral absorption of the selectively absorbing nanoparticles can be used to better predict the final color travel of the article (thin film interference pigment coated with selectively absorbing nanoparticle).

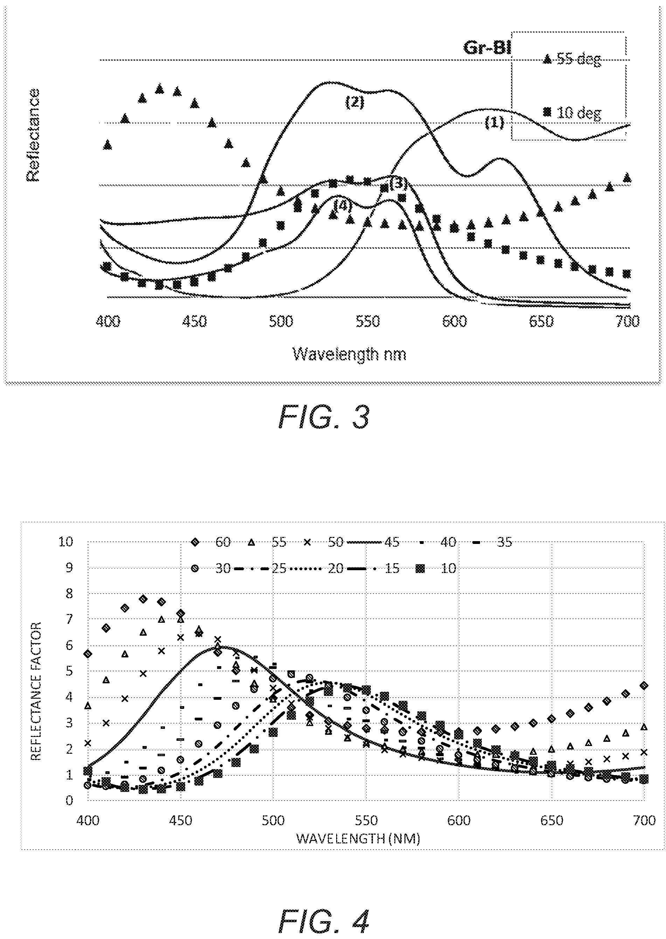

The new color travel as a function of the illumination and viewing angles can be predicted based on the reflectance versus wavelength plots of the thin film interference pigment and on the wavelength and intensity absorbed by the coating of the selectively absorbing nanoparticle. FIG. 3 is graph illustrating the reflectance plots of a thin film interference pigment at low (10 degrees) and high angle (55 degrees) showing a color travel from green to blue. A coating of selectively absorbing nanoparticles (yellow pigment, which is a blue light absorber) was applied. FIG. 3 also illustrates the absorption of several other selectively absorbing nanoparticles (1) cyan: (2) magenta; (3) red 1; and (4) red 1. FIG. 4 illustrates the reflectance curves for the thin film interference pigment when viewed at normal to high angle. The coating of the selectively absorbing nanoparticle (yellow pigment) blocked the reflectance for angles higher than 45 degrees. It was also determined that the design of the thin film interference pigment can be changed to change a peak position of color at different angles so that the angles at which some reflected peaks will be blocked.

Example 3 - Color travel from special effect pigments based on thin film interference is from high to low wavelength as the viewing angle changes from normal (low) to high. Table 2 below shows four (4) selectively absorbing nanoparticles and the wavelength color that each color absorbs. Table 2 also shows two thin film interference pigments and the wavelength color at normal (low) and high. Table 2 also shows the predicted reflected color of an article including the thin film interference pigment and a coating with selectively absorbing nanoparticles.

**Table 2.**

| | Selectively Absorbing Nanoparticle | Cyan | Magenta | Yellow | Green (discontinuous) |
|---|---|---|---|---|---|
| | Absorbs | Red | Green | Blue | Magenta (Blue and Red) |
| Green to Purple | Green | Green | Black | Green | Dark Green |
| | Purple | Blue | Magenta | Red | Black |
| Magenta to Green | Magenta | Blue | Magenta | Red | Black |
| | Green | Green | Black | Red | Green |

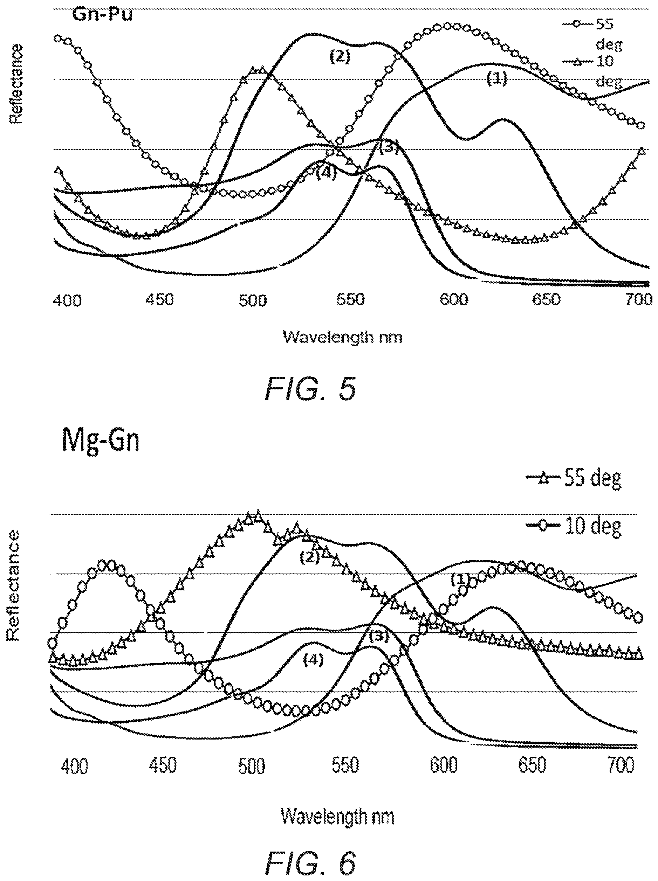

FIG. 5 illustrates the color travel of the thin film interference pigment that color shifted from green to purple. Because there are two reflectance peaks at high angle, it could be possible to select the appropriate single selectively absorbing nanoparticle, such as a yellow pigment, or the appropriate blend of nanoparticles, in order to force the color travel in a reverse direction, such as from green to red. FIG. 5 also illustrates the absorption of several other selectively absorbing nanoparticles (1) cyan: (2) magenta; (3) red 1; and (4) red 1.

FIG. 6 illustrates the color travel of the thin film interference pigment that color shifted from magenta to green, which is basically the reverse of the pigment illustrated in FIG. 5. So, now there are two reflectance peaks at normal. It could be possible to select the appropriate selectively absorbing nanoparticle, such as a cyan pigment, or the appropriate blend of nanoparticles in order to force the color travel in a reverse direction, such as from magenta (blue) to red.

## Claims

1. An article, comprising:
a thin film interference pigment including a reflector layer, a dielectric layer, and absorber layer; and
a coating including a selectively absorbing nanoparticle on the thin film interference pigment;
wherein the selectively absorbing nanoparticle is a nanoparticle chosen from a pigment, a dye, a metallic nanoparticle, a metal oxide, a metal carbide, a metal sulfide, a metal nitride, and combinations thereof.

2. The article of claim 1, wherein the selectively absorbing nanoparticle is colored.

3. The article of claim 1 or claim 2, wherein the coating includes a plurality of selectively absorbing nanoparticles in which a portion of the selectively absorbing nanoparticles are colored; or
wherein the coating includes a plurality of selectively absorbing nanoparticles in which all of the selectively absorbing nanoparticles are a same color.

4. The article of any of claims 1 to 3, wherein the coating includes a plurality of selectively absorbing nanoparticles of different colors; or
wherein the coating includes a plurality of selectively absorbing nanoparticles that are different one from another.

5. The article of any one of the preceding claims, wherein the coating of selectively absorbing nanoparticles is continuous or discontinuous.

6. A method of making the article of any preceding claim, comprising:
providing a thin film interference pigment including a reflector layer, a dielectric layer, and absorber layer; and
coating the thin film interference pigment with a selectively absorbing nanoparticle;
wherein the selectively absorbing nanoparticle is a nanoparticle chosen from a pigment, a dye, a metallic nanoparticle, a metal oxide, a metal carbide, a metal sulfide, a metal nitride, and combinations thereof.

7. The method of claim 6, wherein the coating of selectively absorbing nanoparticles fully encapsulates the thin film interference pigment; or
wherein the coating of selectively absorbing nanoparticles encapsulates a portion of the thin film interference pigment.

8. The method of claim 6 or claim 7, wherein an intensity of a color of the article is increased by a high concentration of the selectively absorbing nanoparticle in the coating.

9. The method of any of claims 6 to 8, wherein an intensity of a color of the article is increased by a fully encapsulating coating.

10. The method of any of claims 6 to 9, wherein an intensity of a color of the article is increased by an increased average particle size of the selectively absorbing nanoparticle.

11. The method of any of claims 6 to 10, further comprising:
providing a layer between the thin film interference pigment and the coating to protect the thin film interference pigment; or
providing a layer between the thin film interference pigment and the coating to provide a receptive surface for the coating.

12. The method of any of claims 6 to 11, wherein the thin film interference pigment exhibits a color travel from a high wavelength of light to a low wavelength of light; and wherein the article exhibits a color travel from a low wavelength of light to a high wavelength of light.

13. The method of any of claims 6 to 12, wherein the article exhibits a decrease in lightness and an increase in hue as compared to the thin film interference pigment.

14. The method of any of claims 6 to 13, further comprising encapsulating the selectively absorbing nanoparticles with a protectant layer.

## Patentansprüche

1. Gegenstand, umfassend:
ein dünnschichtiges Interferenzpigment, das eine Reflektorschicht, eine dielektrische Schicht und eine Absorberschicht beinhaltet; und
eine Beschichtung, die einen selektiv absorbierenden Nanopartikel auf dem dünnschichtigen Interferenzpigment beinhaltet;
wobei der selektiv absorbierende Nanopartikel ein Nanopartikel ist, der aus einem Pigment, einem Farbstoff, einem metallischen Nanopartikel, einem Metalloxid, einem Metallcarbid, einem Metallsulfid, einem Metallnitrid und Kombinationen davon ausgewählt ist.

2. Gegenstand nach Anspruch 1, wobei der selektiv absorbierende Nanopartikel gefärbt ist.

3. Gegenstand nach Anspruch 1 oder Anspruch 2, wobei die Beschichtung eine Vielzahl von selektiv absorbierenden Nanopartikeln beinhaltet, bei denen ein Teil der selektiv absorbierenden Nanopartikel gefärbt ist; oder
wobei die Beschichtung eine Vielzahl von selektiv absorbierenden Nanopartikeln beinhaltet, bei denen alle der selektiv absorbierenden Nanopartikel eine gleiche Farbe haben.

4. Gegenstand nach einem der Ansprüche 1 bis 3, wobei die Beschichtung eine Vielzahl von selektiv absorbierenden Nanopartikeln unterschiedlicher Farben beinhaltet; oder
wobei die Beschichtung eine Vielzahl von selektiv absorbierenden Nanopartikeln beinhaltet, die sich voneinander unterscheiden.

5. Gegenstand nach einem der vorhergehenden Ansprüche, wobei die Beschichtung aus selektiv absorbierenden Nanopartikeln kontinuierlich oder diskontinuierlich ist.

6. Verfahren zum Herstellen des Gegenstands nach einem vorhergehenden Anspruch, umfassend:
Bereitstellen eines dünnschichtigen Interferenzpigments, das eine Reflektorschicht, eine dielektrische Schicht und eine Absorberschicht beinhaltet; und
Beschichten des dünnschichtigen Interferenzpigments mit einem selektiv absorbierenden Nanopartikel;
wobei der selektiv absorbierende Nanopartikel ein Nanopartikel ist, der aus einem Pigment, einem Farbstoff, einem metallischen Nanopartikel, einem Metalloxid, einem Metallcarbid, einem Metallsulfid, einem Metallnitrid und Kombinationen davon ausgewählt ist.

7. Verfahren nach Anspruch 6, wobei die Beschichtung aus selektiv absorbierenden Nanopartikeln das dünnschichtige Interferenzpigment vollständig einkapselt; oder
wobei die Beschichtung aus selektiv absorbierenden Nanopartikeln einen Teil des dünnschichtigen Interferenzpigments einkapselt.

8. Verfahren nach Anspruch 6 oder Anspruch 7, wobei die Intensität einer Farbe des Gegenstands durch eine hohe Konzentration des selektiv absorbierenden Nanopartikels in der Beschichtung erhöht wird.

9. Verfahren nach einem der Ansprüche 6 bis 8, wobei die Intensität einer Farbe des Gegenstands durch eine vollständig einkapselnde Beschichtung erhöht wird.

10. Verfahren nach einem der Ansprüche 6 bis 9, wobei eine Intensität einer Farbe des Gegenstands durch eine erhöhte Durchschnittspartikelgröße des selektiv absorbierenden Nanopartikels erhöht wird.

11. Verfahren nach einem der Ansprüche 6 bis 10, ferner umfassend:
Bereitstellen einer Schicht zwischen dem dünnschichtigen Interferenzpigment und der Beschichtung, um das dünnschichtige Interferenzpigment zu schützen; oder
Bereitstellen einer Schicht zwischen dem dünnschichtigen Interferenzpigment und der Beschichtung, um eine aufnahmefähige Oberfläche für die Beschichtung bereitzustellen.

12. Verfahren nach einem der Ansprüche 6 bis 11, wobei das dünnschichtige Interferenzpigment einen Farbverlauf von einer hohen Lichtwellenlänge zu einer niedrigen Lichtwellenlänge aufweist; und wobei der Gegenstand einen Farbverlauf von einer niedrigen Lichtwellenlänge zu einer hohen Lichtwellenlänge aufweist.

13. Verfahren nach einem der Ansprüche 6 bis 12, wobei der Gegenstand im Vergleich zum dünnschichtigen Interferenzpigment eine Abnahme der Helligkeit und eine Zunahme des Farbtons aufweist.

14. Verfahren nach einem der Ansprüche 6 bis 13, ferner umfassend das Einkapseln der selektiv absorbierenden Nanopartikel mit einer Schutzmittelschicht.

## Revendications

1. Article comprenant :
un pigment d'interférence à couches minces comprenant une couche réfléchissante, une couche diélectrique et une couche absorbante ; et un revêtement comprenant une nanoparticule à absorption sélective sur le pigment d'interférence à couches minces ;
ladite nanoparticule à absorption sélective étant une nanoparticule choisie parmi un pigment, un colorant, une nanoparticule métallique, un oxyde métallique, un carbure métallique, un sulfure métallique, un nitrure métallique et des combinaisons de ceux-ci.

2. Article de la revendication 1, ladite nanoparticule à absorption sélective étant colorée.

3. Article de la revendication 1 ou de la revendication 2, ledit revêtement comprenant une pluralité de nanoparticules à absorption sélective dans laquelle une partie des nanoparticules à absorption sélective sont colorées ; ou ledit revêtement comprenant une pluralité de nanoparticules à absorption sélective dans laquelle toutes les nanoparticules à absorption sélective sont de la même couleur.

4. Article de l'une quelconque des revendications 1 à 3, ledit revêtement comprenant une pluralité de nanoparticules à absorption sélective de différentes couleurs ; ou
ledit revêtement comprenant une pluralité de nanoparticules à absorption sélective qui sont différentes les unes des autres.

5. Article de l'une quelconque des revendications précédentes, ledit revêtement de nanoparticules à absorption sélective étant continu ou discontinu.

6. Procédé de fabrication de l'article d'une quelconque revendication précédente, comprenant :
la fourniture d'un pigment d'interférence à couches minces comprenant une couche réfléchissante, une couche diélectrique et une couche absorbante ; et
le revêtement du pigment d'interférence à couches minces avec une nanoparticule à absorption sélective ;
ladite nanoparticule à absorption sélective étant une nanoparticule choisie parmi un pigment, un colorant, une nanoparticule métallique, un oxyde métallique, un carbure métallique, un sulfure métallique, un nitrure métallique et des combinaisons de ceux-ci.

7. Procédé de la revendication 6, ledit revêtement de nanoparticules à absorption sélective encapsulant entièrement le pigment d'interférence à couches minces ; ou
ledit revêtement de nanoparticules à absorption sélective encapsulant une partie du pigment d'interférence à couches minces.

8. Procédé de la revendication 6 ou de la revendication 7, ladite intensité d'une couleur de l'article étant augmentée par une concentration élevée de la nanoparticule à absorption sélective dans le revêtement.

9. Procédé de l'une quelconque des revendications 6 à 8, ladite intensité d'une couleur de l'article étant augmentée par un revêtement d'encapsulation complète.

10. Procédé de l'une quelconque des revendications 6 à 9, une intensité d'une couleur de l'article étant augmentée par une taille de particule moyenne augmentée de la nanoparticule à absorption sélective.

11. Procédé de l'une quelconque des revendications 6 à 10, comprenant en outre :
la disposition d'une couche entre le pigment d'interférence à couches minces et le revêtement pour protéger le pigment d'interférence à couches minces ; ou
la disposition d'une couche entre le pigment d'interférence à couches minces et le revêtement pour fournir une surface réceptive pour le revêtement.

12. Procédé de l'une quelconque des revendications 6 à 11, ledit pigment d'interférence à couches minces présentant un déplacement de couleur d'une longueur d'onde de lumière élevée à une longueur d'onde de lumière faible ; et ledit article présentant un déplacement de couleur d'une longueur d'onde de lumière faible à une longueur d'onde de lumière élevée.

13. Procédé de l'une quelconque des revendications 6 à 12, ledit article présentant une diminution de la clarté et une augmentation de la teinte par rapport au pigment d'interférence à couches minces.

14. Procédé de l'une quelconque des revendications 6 à 13, comprenant en outre l'encapsulation des nanoparticules à absorption sélective avec une couche protectrice.
